(19) **Europäisches Patentamt**

**European Patent Office**

**Office européen des brevets**

(11) **EP 1 338 902 B1**

(12) **EUROPEAN PATENT SPECIFICATION**

(45) Date of publication and mention
of the grant of the patent:
**03.05.2006 Bulletin 2006/18**

(51) Int Cl.:
*G01S 13/89* (2006.01)          *G01V 8/00* (2006.01)
*G01V 3/12* (2006.01)

(21) Application number: **03251045.5**

(22) Date of filing: **20.02.2003**

(54) **Object detection apparatus and method**

Vorrichtung und Methode zur Detektion von Objekten

Dispositif et procédé pour la détection d'objets

(84) Designated Contracting States:
**DE FR GB**

(30) Priority: **22.02.2002 GB 0204167**

(43) Date of publication of application:
**27.08.2003 Bulletin 2003/35**

(73) Proprietor: **Qinetiq Limited**
**London, SW1E 6PD (GB)**

(72) Inventor: **Salmon, Neil,**
**Qinetiq Limited**
**Malvern WR14 3PS (GB)**

(74) Representative: **Davies, Philip et al**
**QinetiQ Limited**
**Intellectual Property**
**Cody Technology Park**
**Ively Road**
**Farnborough, Hants GU14 0LX (GB)**

(56) References cited:
**US-A- 5 227 800          US-A- 5 942 899**
**US-A1- 2002 001 862**

• **PODOLEANU A G ET AL: "OCT EN-FACE IMAGES FROM THE RETINA WITH ADJUSTABLE DEPTH RESOLUTION IN REAL TIME" IEEE JOURNAL OF SELECTED TOPICS IN QUANTUM ELECTRONICS, IEEE SERVICE CENTER, US, vol. 5, no. 4, July 1999 (1999-07), pages 1176-1184, XP000893466 ISSN: 1077-260X**

## Description

This invention relates to an object detection apparatus and a method of detection of an object. More particularly, but not exclusively, the invention relates to the use of radiometry in object detection.

The detection of concealed objects, for example beneath clothing or buried underground is of importance in fields as diverse as airport security, for example in the detection of explosives, and in missing persons searches, archaeological excavations and searches for remains, treasure hunts, and locating buried pipes and cables.

One of the current techniques for detection of objects concealed under soil or earth employs ground probing radar (GPR) in order to detect the object. This does however suffer from the problem that it can be difficult to discriminate radar reflections due to an object with a small radar cross-section, for example, made of a plastics material, from clutter and also from the large reflection due to the upper surface of the ground.

Radar systems also suffer from the requirement of having a coherent source and the need to frequency sweep. This is costly and can also prove troublesome if unobtrusive, covert, detection is required. It is relatively easy to detect a coherent source as they do not frequently occur in nature. Radar systems also have output powers in the mW to MW range which makes them easy to detect, use power at significant levels, and create electromagnetic pollution.

Radar systems also rely on complex switching and time gating technologies which result in complicated operational and maintenance requirements. The complicated technologies associated with radar systems mean that the bandwidth of radar sources are limited and therefore the spatial resolution of radar techniques are also limited.

Many radar systems send out a coherent signal, with associated frequency hopping and scrambling in order to make it look like noise, and detect the reflected radiation.

Passive mm wave radiometry has been used in the detection of objects in a scene by utilising the contrast in radiation temperatures between the object and its surroundings when illuminated by a natural source, for example solar or thermal background radiation. It has also been proposed for use in detecting concealed (e.g. buried or obscured by vegetation) objects. This technique is limited in its depth sensitivity to approximately 2 cm and also suffers from having a low signal to noise ratio (e.g. approximately 0.05 in some examples).

Examples of results of tests of passive mm wavelengths concealed object detection can be found in the proceedings of SPIE Aerosense Conferences of 1998 and 1999 authored by N.A. Salmon and N.A. Salmon, S. Price and J. Borrill respectively.

In the field of airport security a great deal of emphasis has been placed on the detection of weapons and explosives in order to prevent terrorist attacks. The current technique for detecting explosives entails the use of a "sniffer" sensor to sample the air in order to detect volatile components of an explosive. This is limited in that it is invasive, and can give no idea of the size and shape of the device which has been sensed. Magnetic field sensing devices are also used to detect metal weapons in airport security.

Another area where seeing through things is very useful is in all weather/bad weather imaging systems, for example for flying. This is of particular relevance to helicopters which do not use radar due to the highly cluttered environment in which they operate and difficulties in interpreting radar returns due to helicopters unique trajectories.

Detecting cables or pipes underground can be difficult if they are not metal (e.g. plastic pipes, concrete pipes, fibre optic cables).

Medical imaging systems using visible and infra-red radiation are known, as source intensities are high and the detector technologies are well developed. They are of limited use for foreign body detection as Rayleigh scattering from body tissues is very large and it is therefore extremely complex and difficult to obtain spatial information from such systems.

It is an object of the present invention to provide a new object detection apparatus which, at least in some embodiments at least partly ameliorates at least one of the aforementioned problems or disadvantages.

It is a further object of the present invention to provide a new method of object detection which, at least in some embodiments at least partly ameliorates at least one of the aforementioned problems/disadvantages.

According to a first aspect of the present invention there is provided an object detection apparatus comprising a detection arrangement characterised in that the apparatus further comprises a radiation source adapted to emit thermal-like radiation in the range of the order of 1 GHz and above to 1000 GHz frequency range, and in that the detection arrangement comprises a tuner means to vary a coherence length associated with the detection arrangement, the detection arrangement being adapted to detect radiation emitted by the source and reflected from a cavity defined by two surfaces or interfaces spaced apart by a distance less than the coherence length wherein at least one surface of the cavity is formed by a surface of the object and wherein the object is detected by processing the frequency response of the cavity as detected by the detection arrangement.

Preferably the detection arrangement has an emitter of radiation. The emitter may be provided at generally the same position as the detection arrangement feed, on alternatively laterally spaced from the detection arrangement feed. The emitter may not be an integral part of the detection apparatus, but could be removable (and spaceable therefrom), or could be a separate element.

It will be appreciated that the cavity need not be hollow but may be solid or hollow and may define an object. The object may be something buried in the ground, or the Earth's surface or the surface of any planet.

The tuner is preferably adapted to vary a band pass range of frequencies.

The radiation source may be polychromatic. The radiation source may be associated with the detection apparatus, and may be part of the detection apparatus. The radiation source may be associated with the detection arrangement. If the radiation source is associated with the detection apparatus it may form an irradiating spectral radiometer. The radiation source may comprise part of the detection apparatus circuitry. The radiation source may be an amplifier, or alternatively may be a resistor. The radiation source may emit thermal radiation. The radiation may be polarised in any one of s-, p- or circular polarisations. The radiation source may have an output in a range generally at any one of, or between any pair of, the following frequencies: >1THz, 1THz, 500GHz, 100GHz, 94GHz, 90GHz, 75GHz, 50GHz, 40GHz, 35GHz, 30GHz, 10GHz, 3GHz, 1GHz, <1GHz. Radiation at these frequencies has the advantage of that many materials are effectively transparent, such as, for example, clothing, whilst it has a significant penetration depth in other materials, such as, for example soil and concrete.

Alternatively the radiation source could be a natural radiation source such as, for example, the sun or the sky. As both day and night skies illuminate a scene with mm/cm radiation the time of day becomes irrelevant in object detection.

The detection arrangement may comprise a single sensor or an array of sensors. The detection arrangement may include a feed. The detection arrangement may be a radiometer. The radiometer may have a plurality of sensors, which may form individual data channels. The sensors may have a conical field of view.

The detection arrangement may have associated amplification means. The amplification means may emit broadband noise, in use. The broadband noise may be thermal noise or may be Johnson like noise. The broadband noise may pass out of the detection arrangement and illuminate a detection volume, in use. For example there may be a detection arrangement feed, or horn, and emitted radiation may leave the horn and detected radiation enter it. The amplifier may act as a radiation source, in use. This has the advantage of increasing the radiation levels in order than an improved signal to noise ratio can be achieved in the detection of an object. Each channel may have the same amplifier or they may have separate amplifiers.

The radiation power due to the radiation source is typically within the range 100pW to 1nW. This is a level comparable with background radiation levels and is therefore difficult to detect. The radiation source may have a radiation temperature in a range between any two of the following <50K, 50K, 100K, 200K, 300K, 400K, 500K, 600K, 700K 750K or >750K. A radiation source of a higher radiation power than those listed may be used, however higher power levels are typically not required for most applications due to low cavity losses.

The tuning means may be an electronic circuit. The tuning means may include a digital sampling device, for example a fast analogue to digital converters (ADC). Alternatively the tuning means may employ switchable filters, for example in filter banks. The tuning means may employ surface acoustic waver analysers or a spectrum analyser. The tuning means may vary the bandwidth of the detection arrangement.

The varying of the bandwidth of the detection arrangement may vary the apparent coherence of the scattered radiation detected by the detection arrangement. Varying the bandwidth of the detection arrangement may vary a coherence length associated with the detection arrangement. There may be provided a multichannel detection arrangement, each individual channel may have an individual coherence length associated with it. The coherence length may be defined by the spectral width of each channel of the detection arrangement, spectral receiver. The coherence length may define the size of the cavity active in a standing wave. The bandwidth may be in a range between any two of the following <3MHz, 3MHz, 50MHz, 100MHz, 300MHz, 500MHz or 1GHz, or >IGHZ. By varying the bandwidth of the detection arrangement only radiation in the pass bandwidth is amplified selectively over other frequencies that may be present, and so the apparatus effectively looks for radiation having a certain frequency.

The apparatus may image the object. The image may be a real-time image.

The whole of the bandwidth may be sampled simultaneously. Such simultaneous sampling of the whole of the bandwidth may reduce the integration times required over existing systems.

The radiation emitted by the radiation source may cause a plurality of standing waves to be formed within the cavity. The radiation emitted by the source may have a frequency below 8GHz.

The two surfaces may be surfaces of any two of the following: air, vacuum, metal, plastic (including all man made polymeric materials), wood, soil, sand, tarmac, concrete, cloth, paper composite materials or a fluid, or an interface between two dissimilar materials.

The detection arrangement may be arranged to detect linear polarisation, preferably as a function of angle. This allows configurational information of the object to be obtained, for example if substantially or completely spatially incoherent radiation is used to illuminate it. Alternatively an imaging polarimeter may be used in order to measure the full Stokes vector of the radiation.

The detection arrangement may be arranged to detect left handed, or right handed circularly polarised radiation. If the object is illuminated with circularly polarised radiation this will allow configurational information to be obtained, such as, for example, if an object is long in one direction and short/narrow in another, for example a wire. Non-polarised radiation may reflect from an object with partial linear polarisation.

The object may be buried in the ground. Alternatively it may be concealed under clothing, or inside a human body. The object may be obscured by cloud or other natural phenomenon. The object may even be in a separate room or building from the detection arrangement. The penetration of mm/cm wavelength radiation through materials will allow this.

The object may contain explosives. The object may be made predominantly of non-metal (e.g. plastics). The object may be a landmine. The object may be contraband e.g. drugs or weapons. The object may be a wire.

The object may be a foreign body in a wound. There may be provided means to image the object. Extracting glass or plastics fragments from a wound is not easy because it can be hard to see them.

There may be provided a discriminator to discriminate between metallic and non-metallic objects and to discriminate between different non-metallic objects, for example in the field of collision avoidance. The discriminator may be a variably polarisable filter. The position of the discriminator may be maintained relative to a vehicle upon which it is mounted.

The apparatus may be incorporated or form a security sensor, for example at an airport.

The apparatus may be used to measure the real and complex components of the relative permittivity of the object. This measurement may allow the discrimination of different types of material, for example the dielectric constant of soil varies from (2.6,0.02) for completely dry earth to (22,5) for moisture saturated soil. Plastics have typical dielectric constants in the range (2.6-3.6, <0.1). Metal has a typical dielectric constant $(1,10^6)$ making them almost perfect reflectors in the GHz region.

The use of two spaced apart radiation sources having the same frequency to illuminate the object may create interference fringes on an object. This would allow the detection of objects concealed under, for example clothing. The position of the fringes may indicate the shape and/or spatial extent of the concealed object. The position of the fringes may allow the detection of explosives.

The detection arrangement may be directed directly above the position of the time of the object to be detected, directly above the material above the object that is hiding the object, or it may be directed at an acute angle to the general position of the object. The emitter may also be at an acute angle to the normal to the material that hides the object, possibly to the other side of the normal.

The apparatus may be portable. The apparatus may weigh 1kg or less, 2kg or less, 5kg or less or 10kg or less. The apparatus may be mounted on a vehicle, such as for example an aircraft, a helicopter or a car. The apparatus may, in use, measure distances.

There may be software associated with the detection arrangement or a processor which receives signals from the detection arrangement. The software may process the signals received by the detection arrangement. The processing may involve calculation of the dielectric constant of the object. The processing may further involve comparison of the dielectric constant of the object (or of other received signal characteristics) with a database of in order to ascertain information about the object, for example the material of which the object is made.

There may be provided at least two spaced apart radiation outputs. The outputs may receive the radiation from a single source. The radiation may interfere on a subject, in use. The interference may yield information as to the configuration of an object concealed on the subject.

According to a second aspect of the present invention there is provided a method of detecting an object including the steps of:

    i) providing a detection arrangement adapted to detect radiation from a radiation source; characterised by the steps of
    ii) providing a radiation source adapted to emit thermal like radiation in the 1 GHz to 1000 GHz frequency range
    iii) tuning a bandwidth associated with the detection arrangement thereby varying a coherence length associated with incoming radiation; and
    iv) detecting radiation emitted by the source and resonantly reflected from a cavity defined by two interfaces or surfaces spaced apart by a distance less than the coherence length, and
    v) processing the frequency response of the cavity as detected by the detection arrangement to identify the presence or otherwise of an object.

The method may include a step of providing the radiation source in association with the detection arrangement. The method may include providing the radiation source as an element of the detection arrangement circuitry, for example an amplifier. The method may include emitting thermal like radiation from the radiation source.

The method may include polarising this radiation in any one of the following: s, p, right or left handed circular polarisations. Vertical polarisation may be used. The modulation of polarisation between vertical and horizontal polarisations may allow discrimination between dielectrics and metals.

The method may include providing the detection arrangement as either a single element or a multiple element array. The method may include providing the detection arrangement in the form of a radiometer. Each detection arrangement element may have an individual coherence length associated with it.

The method may include scattering the radiation such that it interferes. The method may further include scattering the radiation such that it forms standing waves either within the object or between the interface of the two media and the object or both of the aforementioned cases. The method may further include forming a plurality of standing waves. The two interfaces or surfaces could comprise any tow of the following: top surface of object, bottom surface of object, first surface of object, second surface of object, interface between material covering the object and another medium (e.g. soil/air), surface detection arrangement; interface between two strata of different materials.

The method may include imaging a concealed object.

The method may include the step of varying an optical path length of radiation thereby altering the phase of the detected radiation relative to the emitted radiation. This may allow calibration of the detection arrangement.

The method may include the steps of calculating the dielectric constant of the material of the object, or of the material that cover it/is next to it, from the reflected radiation and may involve calculating the spacing of the two surfaces.

There may be more than two surfaces reflecting radiation, and there may be more than one interface - interface distance, and more than one material capable of being dimensioned and/or analysed, and/or depth-assessed.

The method may further include the step of processing data indicative of the detected radiation.

The step of processing the data may include removing a d.c. component therefrom and measuring an oscillation amplitude.

The processing of the data may also include fitting the data to establish a thickness and/or relative permittivity of a material which, at least partially, fills the cavity.

Alternatively, the method may include d.c. coupling the detection arrangement and utilising an absolute signal level to be processed.

The method may include direct digitisation of an incoming reflected wavefront to provide a digital signal.

The method may further include digital processing of the digital signal in order to obtain a power spectrum, typically using a fast ADC.

The method may yet further include averaging a series of power spectra.

According to a third aspect of the present invention there is provided a method of detecting an object in a wound comprising the steps of:

i) irradiating the wound with thermal-like radiation;

ii) collecting reflected, resonant radiation;

iii) analysing said radiation to determine the dielectric properties of a detection volume; and

iv) discriminating between the object and surrounding tissue.

The method may include mapping the detection volume so as to image the detection volume.

Irradiating the wound with thermal-like radiation may comprise using a specific irradiator/emitter, or natural ambient radiation may suffice. It is envisaged that an emitter would usually be provided.

The method may include avoiding direct contact with a patient/patient's wound.

The radiation may be mm/cm wavelength radiation.

According to a fourth aspect of the present invention there is provided a method of distance measurement including the steps of:

i) providing a radiation source;
ii) emitting radiation;
iii) detecting radiation resonantly, reflected from a surface; and
iv) processing a signal indicative of the detected radiation to provide a measure of the distance between the radiation source and the surface.

The radiation source may be provided on a vehicle, for example an aircraft, a helicopter or a car.

The surface may be the ground, or may be a surface of a second vehicle. Small changes in the distance between the source and the surface may be measured, allowing vibrometry to be performed.

According to a fifth aspect of the present invention there is provided a method of concealed object detection comprising the steps of:

i) emitting radiation of a first frequency;

ii) creating a standing wave, from said radiation, between first and second reflectors in an observed scene, the standing wave being of a second frequency;

iii) detecting the radiation at the second frequency; and

iv) evaluating the distance between the first and second reflectors using knowledge of the first and second frequencies.

Preferably the first and second frequencies may be different. There may be provided a tuner. This tuner may determine what range of frequencies, bandwidth, is detected. The bandwidth may determine a maximum distance between the reflectors which may be evaluated.

According to a sixth aspect of the present invention there is provided a millimetre wave imaging security scanner comprising an object detection apparatus according to the first aspect of the present invention.

Such a security scanner allows the detection and identification of a threat by analysis of frequency structure within spectrum arising from the broadband radiation impinging upon a subject and threat.

The scanner may include a large area radiation source, typically the area of the source is $>>\lambda^2$ and may be of the order of several $m^2$. The radiation source may be a quasi-thermal radiation source.

The detection arrangement may comprise a millimetre wave imaging system. The detection arrangement may comprise a radio frequency filter bank, typically including at least one comb filter. The detection arrangement may be arranged to generate a pixelated image of a scene. at least one comb filter may be arranged to detect frequency structure within a pixel of the image, the frequency structure typically corresponding to cavities formed by a layer of clothing, explosive material, an explosive device, a firearm, a blade or any other weapon and a subject's body.

The interfaces may be formed between any two, or more, of the following: subject's body, subject's clothing, explosive material, explosive device, firearm, blade, any other weapon.

According to another aspect of the present invention there is provided an object detection apparatus including a detection arrangement adapted for use with a radiation source, the detection arrangement having a tuner to vary a coherence length associated with the detection arrangement, the detection arrangement being adapted to detect radiation emanates from a cavity defined by two surfaces or interfaces spaced apart by a distance less than the coherence length.

According to a further aspect of the present invention there is provided a method of detecting an object including the steps of:

i) providing a detection arrangement adapted for use with a radiation source;

ii) tuning a bandwidth associated with the detection arrangement thereby varying a coherence length associated with the detector; and

iii) detecting resonant, reflected radiation from a cavity defined by two interfaces or surfaces spaced apart by a distance less than the coherence length.

The invention will now be described, by way of example, with reference to the accompanying drawings in which:

**Figure 1** is a schematic representation of a concealed object detection apparatus according to an aspect of the present invention;

**Figure 2** is a schematic representation of an active concealed object detection apparatus according to an aspect of the present invention;

**Figure 3** is a schematic representation of the physical processes involved in the concealed object detection apparatus of Figures 1 and 2;

**Figure 4** is a schematic amplitude versus frequency plot for an object detected by an apparatus according to an aspect of the present invention;

**Figure 5** is a schematic representation of a fringe generating arrangement according to an aspect of the present invention;

**Figure 6** is a schematic representation of a wound scanning arrangement incorporating the present invention;

**Figure 7** is a schematic representation of an embodiment of a range finder/collision avoidance arrangement incorporating the present invention;

**Figure 8** is a schematic representation of a linear polarisation exciter for object orientation discrimination;

**Figure 9** is a schematic representation of a circular polarisation exciter for object orientation discrimination;

**Figure 10** is an amplification arrangement for emitted circularly polarised radiation;

**Figure 11** is an amplification arrangement for emitted linear polarised radiation;

**Figure 12** is a schematic representation of detection of a wire using incoherent incident radiation;

**Figures 13** (a & b) are schematic representation of a polarimetric view of a scene containing houses and a vehicle in (a) horizontal polarisation (b) vertical polarisation.

**Figure 14** is a schematic representation of a Cassegrain detection arrangement;

**Figure 15** is a schematic representation of a polarimeteric sensitivity arrangement, in use, with the detection arrangement of Figure 14;

**Figure 16** is a schematic representation of an embodiment of a range finder/collision avoidance arrangement incorporating the present invention;

**Figure 17** is a schematic representation of a yet further embodiment of a range finder/collision avoidance arrangement incorporating the present invention; and

Figure 18 is a schematic representation of a millimetre wave imaging security scanner according to at least an aspect of the present invention.

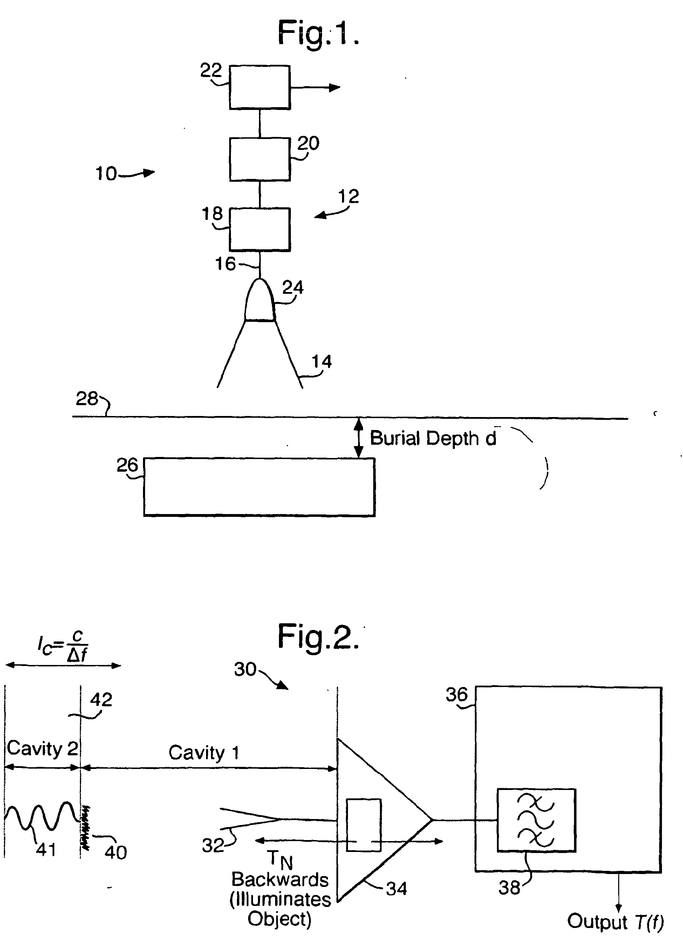

The passive concealed object detection apparatus 10 of Figure 1, comprises a detector arrangement 12 which includes a waveguide horn 14, a coaxial cable 16 linking the waveguide horn 14 to a multichannel narrow band radiometer 18. Signals from the radiometer 18 are passed to a fringe detector 20 and the output from the fringe detector 20 is passed to a processor 22 having data interpretation software running thereon.

Discrimination components 24 are mounted in the transitional region between the horn 14 and the coaxial cable 16. The nature and function of the discrimination components 24 will be described hereinafter.

An object 26 to be detected, for example a bone or an explosive device, lies at a depth, d, beneath a surface 28, for example of soil, of clothing or of packaging.

This detection arrangement will be effective for both passive and active cm/mm wavelength object detection systems.

Figure 2 shows an active object detection apparatus 30. The apparatus 30 comprises a feed horn 32, a wide band radio-frequency amplifier 34 and a spectral radiometer 36. The spectral radiometer 36 includes a radio-frequency band pass filter 38.

In use, the amplifier 34 generates broadband thermal, or Johnson, noise, a portion of which is passed forward to the radiometer 36 and forms part of the usual noise associated with the radiometer 36 electronic circuitry.

However, a fraction of the amplifier 34 noise, $T_N$, is passed backwards out of the feed horn 32 and illuminates a detection area 40. The illumination of an object to be detected by broadband microwave and millimetre wave radiation results in the formation of standing waves 41 (radiometric cavity fringes). In the example of Figure 2 it is the standing waves 41 associated with a cavity (or object) 42 which are desired to be detected. The emitted noise, $T_N$, can be modulated, possibly by the use of a variable gain amplifier to amplify the Johnson noise from a resistor, to increase the visibility and cause phase reversal of the fringes. The amplifier 34 effectively acts to excite a large number of fringes via a leaky waveguide.

It is envisaged that the radiation source, for example the amplifier, need not be directly associated with the detection arrangement but may be spaced apart from it in a so called bi-static arrangement. This has the advantage that due to aspect ratio considerations the detection area is reduced and spatial sensitivity is enhanced.

A coherence length, associated with the apparatus 10 or 30, is set by the filter 38 in accordance with the following:

$$l_c = \frac{c}{\Delta f n},$$

where $l_c$ is the coherence length

c is the speed of light (in vacuo)

$\Delta f$ is the band pass filter bandwidth.

n' is the real part of the refractive index of the medium.

It is the coherence length which defines the size of the cavity active in the standing wave and it is defined by the spectral width of each channel in the detector. Effects due to etalons or cavities that are longer than the coherence lengths will not be detected. It is preferred to set the coherence length to be several times the estimated cavity size in order to excite more than one standing wave. This also allows the resolution of the radiometric cavity fringe in the frequency domain.

It will be appreciated that if the distance from the detector 30 to the surface of the ground 40 (size of cavity) is longer than the coherence length than the precise size of this distance does not matter. This enables the detection arrangement to be hand-held, or vehicle mounted (e.g. helicopter or car).

The feed horn 32 not only emits the amplifier noise, $T_N$, but also collects the radiometric cavity fringes caused by the standing waves and passes them to the amplifier 34 and radiometer 36. It is at the radiometer 36, in the filter 38, that the coherence length selectivity is imposed. A typical bandwidth of 40GHz allows a spatial resolution of a few millimetres.

The front end (feed horn 32) reflectivity of the radiometer can be increased to effectively enhance the radiometric cavity fringes as this would effectively increase the output from the feed horn 32. In the case of weak cavity effects it is envisaged that an amplifier could be placed between the object and the radiometer in order to compensate for the reduced signal entering the radiometer due to the increased front end reflectivity.

If direct detection of circularly polarised radiation is desired a spiral antenna could be used instead of the feed horn 32. Other possible antennae include cylindrical dipole, Yagi, microstrip, end fire helical, biconical, log periodic, bow tie, TEM and Vivaldi.

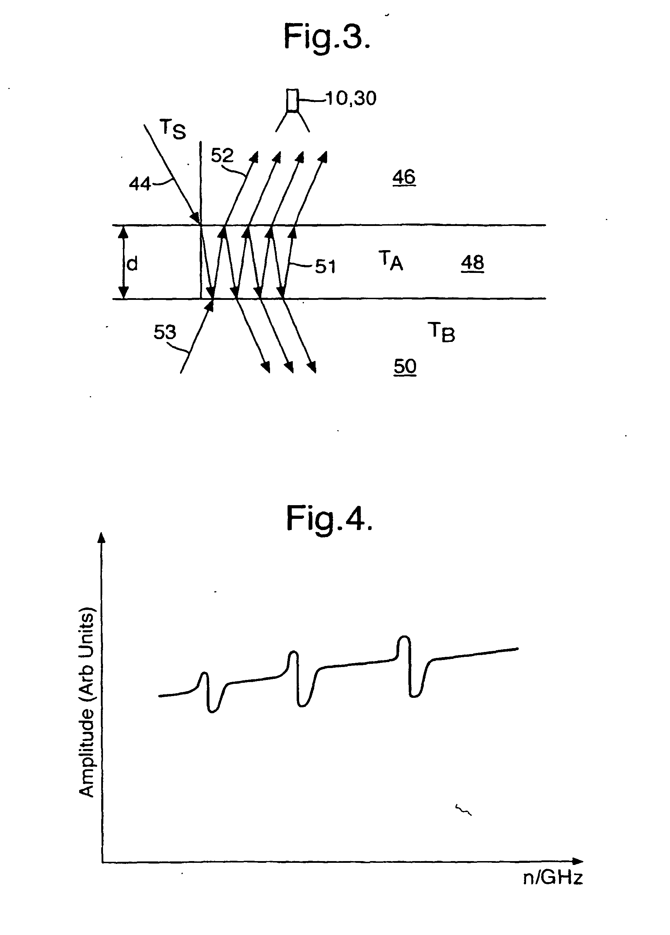

Figure 3 shows details of the processes involved in radiometric cavity fringe formation and object detection. Broadband thermal radiation 44 is transmitted from a source, (not shown) for example the sky, or an amplifier or resistor associated with the apparatus 10,30, through a first medium 46, this will typically, but not exclusively, be air, and enter a second medium 48, for example soil or clothing, but is typically opaque to visible light. An object 50 buried at a depth, d, below the interface between the first 46 and second 48 media constitutes a third medium and is typically made of plastic, metal, glass or bone (for example)

The apparatus 10,30 will typically be offset from the object by an angle, typically of the order of 30° (more generally in the range 20°- 40°), in order to obtain effective illumination of the object 50 by the radiation 44. In a passive system 0° incidence angle will lead to obscuration of the source (the sky) by the apparatus 10,30 relative to the object 50. Also the angle should not be close to 90° as the path length in the earth will be long and there would be significant absorption of the radiation by the earth. In an active system, the incidence angle could be 0°, but there are reasons why an inclined angle may still be preferred in some situations.

The broadband radiation 44 has frequency components in the microwave and millimetre wave regions of the electromagnetic spectrum. Standing waves (radiometric cavity fringes) 51 are set up within the second medium 48 between its interface with the first medium 46 and the object 50 by the radiation 44. These standing waves 51 are evanescent waves 52 outside of the second medium and result in (peaks and troughs) in an intensity versus frequency spectrum recorded at the detector. The standing waves occur with a periodicity given by:

$$\Delta f = \frac{c}{2nd}$$

c is speed of light (in vacuo)

n is refractive index of the medium

d is distance over which interference occurs (depth of buried/concealed object or size of cavity).

These standing waves 51 exhibit radiometric temperature variations in frequency space which can be assumed to be sinusoidal . Given a peak to peak radiometric temperature modulation of $T_{max}-T_{min}$ the radiometric temperature variations of the standing waves, at a radiation frequency f, is given by:

$$T(f) \approx (T_{max} - T_{min}) \sin \left(4\Pi n \, \frac{fd}{c}\right)$$

The refractive index of a medium can be measured, for example by an electrical probe to measure the moisture content of earth. This may be used with an estimated fringe spacing to estimate the depth, d. Thus the existence of the object, and its depth beneath the surface, can be established.

The radiometric cavity fringes 51 are visible in frequency space and it is the spacing of the fringes in the frequency domain, is indicative of the thickness/depth of the cavity/object being probed (and is a measure of the real part of the dielectric constant of the material being probed) the amplitude of the oscillations of the fringes is a measure of the imaginary part of the dielectric constant of the material being probed.

In order to determine the amplitude of the oscillation of the radiometric cavity fringes the processing means must remove a d.c. background component from the amplitude vs frequency plot (as shown in Figure 4) and determine the oscillation amplitude with respect to a zero background level. Alternatively, the detector may be D.C. coupled which allows the absolute level of the signal to be used for analysis. In either case a fitting routine can be used to estimate the thickness and relative permittivity of the material, thereby enabling substance identification (possibly from a library/look up table of "expected" materials for objects of known kind). In addition or alternatively, the thickness of the object may be used, possibly with a look up table for "expected" classes of objects, to identify the hidden object, or classify it.

The measured radiation temperatures of the material being probed is determined by its reflection coefficient which is a function of frequency for a cavity and therefore contains information concerning the complex relative permittivity of the material. Typically the absolute level of the radiation temperature yields information concerning the real component of the complex permittivity.

If both the real and imaginary parts of the dielectric constant are known of the cavity/object it is possible to obtain information relating to the material which forms the object/cavity. For example, the real and imaginary $\varepsilon'- i\varepsilon_r''$) parts of a selection of materials areas follows: plastic explosives - (2.9, 0.06); metals (1,10$^6$); plastics in the range (2.6, <0.1) - (3.6, <0.1); wet soil (22,5).

The determination of material type can be carried out by comparison of measured real and imaginary dielectric constant values to known values stored in a 'look-up' table or by any other convenient method.

Once the type of material, i.e. dielectric constant, from which the object is made is known a more accurate determination of the depth, d, can be made. Metals, good conductors or water attenuate mm/cm waves very rapidly and therefore there is a very limited penetration depth, e.g. $0.2\mu m$ in metals and 0.3 mm in water.

Similar standing wave effects will occur between the interface of the first 46 and second 48 media and the apparatus 10,30. There will also be standing wave effects within the object 50, provided that it is of finite depth.

Such a system allows the depth of burial or concealment of an object d, to be determined by the output of the radiometer 36 being passed to a processor (similar or the same as that shown in Figure 1) which processes (e.g. counts) the radiometric cavity fringes and thereby determines the size of the cavity. The technique allows the penetration of the medium to several times the skin depth. The precise depth of penetration is dependent upon the properties of the medium, frequency and magnitude of the irradiating noise temperature.

The coherence length of the apparatus 10,30 is too short to detect the detection arrangement - object cavity, cavity 1, but is long enough to detect the cavity defined by the object, cavity 2. Therefore, spatial selectivity and good spatial resolution can be achieved by this technique. Cavity 1 may be of the order of mm to metres in size. Of course, by varying the bandwidth of detected signals to be amplified it is possible effectively to vary the coherence length, and thereby look for different distances between two reflecting surfaces/interfaces, (possibly the soil depth/depth in human tissue of an object).

It is typical for passive systems that the radiation 44 has a temperature, Ts, which is less than that of the second medium 48, $T_A$, and the object 50, $T_B$. This can result in the emission of radiation 53 from the object 50 and the second medium into the first medium 46.

If a phase change is introduced in the first medium 46 the radiometric cavity fringe spacing will change. It is possible to phase sweep in order to nullify the fringes. The phase of the radiation is swept slowly, relative to the sweep time of the spectrum analyses, from O to $2\Pi$ radians, whilst averaging the spectrum. This results in the fringes effectively being nulled whilst the envelope due to the object remains unchanged. Such a phase sweep would effectively measure the reflectivity in a similar way to a voltage standing wave ratio (VSWR) measurement. This reflectivity would be measured at each frequency and this frequency dependent reflectivity would contain the reflectivity information about the concealed object.

The phase shift can be introduced by a time delay which may be induced by moving the apparatus towards/ away from the medium 1/medium 2 interface. A phase change of at least $2\Pi$ should be introduced thus:

$$\Delta d = \frac{c}{f} \rightarrow at\ 1\ GHz\ \ \Delta d = \frac{3x10^8}{1x10^9} = 0.3m$$

Typically at a particular frequency a fringe will undergo maximum radiation temperature variation from a movement of one quarter of the wavelength.

It will be appreciated that it is not necessary to move the apparatus bodily towards and away from the object to create a phase change - increased optical path length can be achieved by causing radiation to follow an increasable path length in a phase change unit. This may involve mirrors and possibly a moving component, (e.g. linearly moving).

Applying the phase sweeping for fringe nulling technique to plane earth which contains no buried objects allows the frequency response of the apparatus to be calibrated.

The apparatus can be calibrated by passing the detection arrangement over a medium which is known to contain no objects or a piece of absorbing material so that the signal level on all detection channels can be zeroed/a base level recorded.

The filtering of the radiation prior to detection allows partially coherent radiation to interfere. This partial coherence allows the advantages of both incoherent (mm wave) and coherent (radar) object detection/imaging systems to be had without the disadvantages of either.

Another advantage of such a system is that as the whole of the bandwidth is utilised simultaneously integration times are minimised and therefore a desired signal to noise ratio can be achieved more quickly than in conventional systems, e.g. radar.

A further advantage of wide bandwidth systems is that remote narrow band sources will not cause a deterioration in the object detection capability of the system but will enhance the radiometric cavity fringes thereby improving the object detection capability of the system.

It will be appreciated that in the case of a multichannel radiometer each individual channel may have its own coherence length associated with it in order to allow simultaneous multiple depth probing. A multichannel radiometer may allow imaging of the detection volume.

As the apparatus does not require natural illumination its use is not restricted to the frequencies of atmospheric windows and it can be used indoors. Only a cavity which has a depth less than the coherence length set by the filter 38 can be detected by the apparatus 10,30.

In order to enhance signal to noise ratio it is preferable to have an irradiation temperature which is at least twice the radiation temperature of the feedhorn 32 or a very low irradiation temperature, typically less than 150K. For example a practical arrangement may have an irradiation temperature of 1000K at the front end of a radiometer.

Enhanced signal to noise ratios can also be achieved by moving the radiation source adjacent to, or being part of, the detection apparatus. Thus, radiation from the source would only enter the apparatus after reflection from this object. This would lower the total noise in the radiometer and enable higher power irradiation sources to be used. Preferably the peak to peak amplitude of the fringes is, for example, three times the radiometric noise.

Direct digitisation of signals output by the RF amplifier can be used to produce a power spectrum and averaged over a time period. For example, a pulse length of 5-10 ns digitised at a rate of 20GHz over a period of several milliseconds results in several million spectra being averaged with a consequent improvement in signal to noise ratio of several thousand.

The level of radiation emitted by the amplifier 34 is typically 100 to 500 pW, assuming a sampling area of approximately 100cm$^2$, this yields a radiation density of 5pw/cm$^2$ which is less than four times background radiation density levels, 1.4pW/cm$^2$, and approximately six orders of magnitude lower than permitted UK National Radiological Protection Board (NRPB) safety levels of ~10mW/cm$^2$. For example, a noise temperature of 1000K yields an irradiation power of approximately 140 pw.

The low levels of emitted radiation mean that this detection apparatus is ideal for covert/non-intrusive object detection as may be desired at airport security checks for example (or indeed security checks at other places, such as buildings, transport terminals, or even mobile checkpoints).

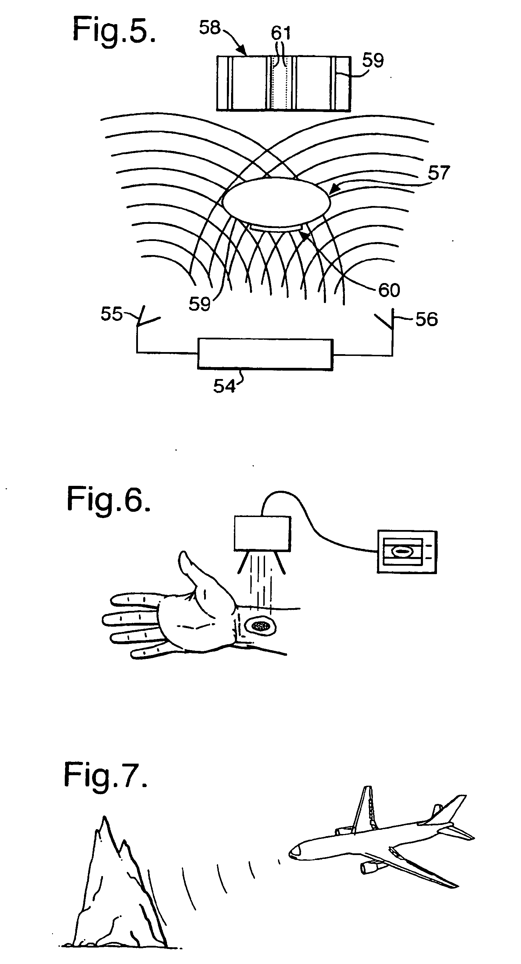

Figure 5 shows a phase scanning apparatus and method of object detection in which the use of a thermal noise source 54 and two emitters 55, 56 emitting a single frequency so as to, in use, irradiate a subject 57 (e.g human being security-screened) and a detector 58. Interference fringes 59 can be formed on the subject 57 due to the relative phase difference between the two beams from the emitters 55, 56. The path lengths between each of the emitters 55, 56 and the subject 57 should be identical and the bandwidth of the source 54 should be such that there is substantially no interference with thermal background radiation by setting a detector bandwidth such that only radiation with a coherence length similar to that of the subject is utilised. For example, clothes are transparent to millimetre radiation' but a human body is approximately 40% reflective and by generating fringes 59 of adequate spacing the three dimensional shape of the body could be found. The detector 58 views the subject 57 from between the emitters 55, 56. The changes of fringe spacing upon the introduction of the subject 57 into the field of view of the detector 58 yields information regarding the shape of the subject 57.

If the subject 57 has an object 60, for example a dielectric such as an explosive device, or a plastics material knife, attached to it there will be a change in the path lengths between the emitters 55, 56 and the detector 58 and this results in the a change in the periodicity and shape of the fringes fringes 59, for example they move closer together and becoming increasingly circular if a plastics material is attached to a person. This is shown schematically by the dotted lines 61 in Figure 5.

There may be an air gap between the subject 57 and the object 60. Any air gap between the subject 57 and the object 60 does not affect the detection process.

The placing of fringes over an object can be used to render its three dimensional shape.

This technique is applicable even when the explosives are undetectable by conventional imaging techniques. Similarly, the above technique could be used to find weapons, or packages of drugs or other contraband outside or inside the body. The technique could also be used to scan packages.

A medical application of a mm/cm wavelength concealed object detection systems is in the detection of foreign bodies in wounds see for example Figure 6. Although the penetration of mm/cm wavelength radiation is only a few cm it can be used to detect objects, such as, for example, plastics, which are difficult to detect by more conventional methods such as x-ray and ultrasound. It also has the advantage that there need not be contact between the detector and the patient, unlike ultrasound. The use of a small aperture, typically the same size as the wavelength of the radiation would enable mm or sub-mm transverse resolutions.

Such systems as have previously been described also have use in altimeter systems, for example in helicopters and aeroplanes as they can provide distance measurements accurate to a few cm, see, for example, Figure 7. They can also be used in forward looking collision avoidance systems. This will require the use of large coherence lengths, bandpass filter bandwidths and can be used in fog or cloud over a range of over 1000m with a precision of a few mm.

The use of polarised radiation can yield further, configurational, information about detected objects. Indeed it may be advantageous to make the detector sensitive to vertical polarisation as this has greater penetration into the ground when looking for buried objects.

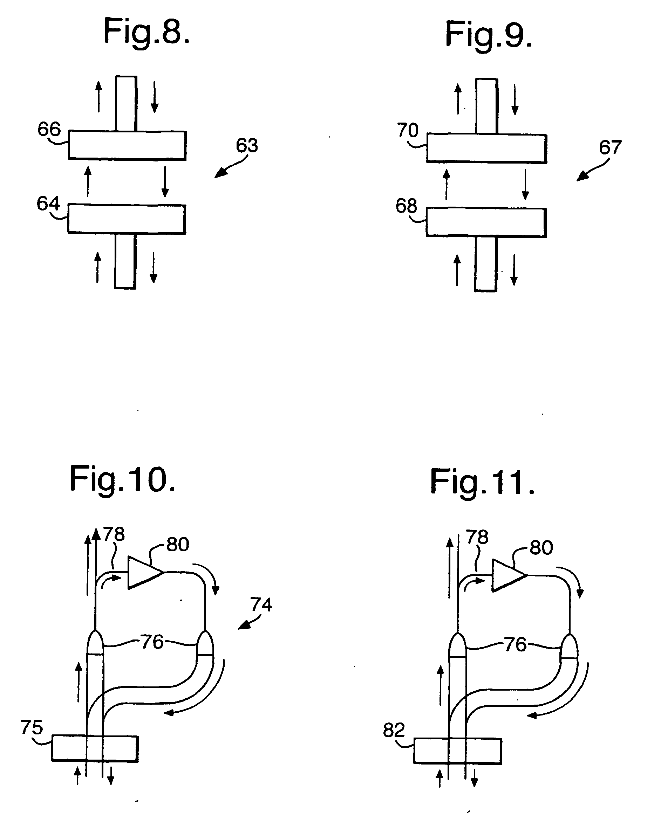

Figures 8 and 9 show polarisation discrimination components 24 for linear polarised radiation and circularly polarised radiation respectively.

A linear polarisation discriminator 63 comprises a first quarter wave plate 64 which is rotatable, adjacent the feed 14, and a second fixed quarter wave plate 66 which is adjacent the radiometer 18.

The first quarter wave plate 64 is rotated such that its fast axis selects the desired angle of the linear polarisation of the radiation to be detected. The radiation is circularly polarised intermediate the first and second quarter wave plates 64, 66. The fixed second quarter wave plate 66 imposes the desired linear polarisation upon the radiation prior to it passing to the radiometer 18.

The circular polarisation discriminator 67 comprises a quarter wave plate 68 which is rotatable between two positions 90° apart, adjacent the horn 14, and a fixed 45° Faraday rotator 70.

The quarter wave plate 68 is used to select either of the two orthogonal polarisation modes of the radiation by the 90° rotation of its fast axis. The radiation is linearly polarised in the region intermediate the quarter wave plate 68 and the Faraday rotator 70. The Faraday rotator 70 imposes the desired linear polarisation upon the radiation prior to passing it to the radiometer 18.

It will be appreciated that although described with reference to the apparatus of Figure 1 both the linear and circular polarisation discrimination are applicable to any generalised concealed object detection system according to the present invention.

It will also be appreciated that although referenced with respect to radiation entering the detection apparatus 10 the polarisation discriminators can be used to polarise the outgoing broadband thermal like amplifier noise radiation, $T_N$.

The ability to detect circular polarisation is particularly advantageous as it allows the discrimination of natural and man made radiation sources. There are no or very few known terrestial natural sources of circularly polarised microwave or millimetre wave radiation. Thus any such circularly polarised radiation must be man made.

Alternatively, it is possible, as shown in Figures 10 and 11, to increase the amplification of either a linear or circularly polarised output by the use of a radio frequency amplifier.

A linear polarisation amplification arrangement 74 comprises a 45° Faraday rotator 75 between the horn 14, a waveguide/coaxial cable transition region 76, a spur 78 and a radio frequency amplifier 80.

The incoming radiation passes through the Faraday rotator 75 and the transition region 76. A portion of the radiation is branched off from the main coaxial cable down the spur 78 and passes through the amplifier 80, the remainder of the radiation being passed to the radiometer 18.

The amplified portion of the radiation is passed through the transition region 76 and Faraday rotator 75 to be emitted from the horn 14.

This results in an increase in the size of the radiometric fringes detected and avoids the detection of signals which have exited the amplifier and passed back to the horn 14 which have not struck the object to be detected.

An arrangement for the emission of circularly polarised radiation is shown in Figure 11 and is substantially the same as that for linearly polarised radiation with a quarter wave plate 82 replacing the Faraday rotator 75.

Polarisation dependent effects can be used to enhance the contrast of objects and also to gain configurational information regarding an object.

For example, non-buried objects, plastic and wood, have been imaged in both horizontal and vertical radiation polarisations against a background of tarmac. There were significant differences in the apparent temperatures when viewed using the different polarisations. It is therefore possible that a multiple polarisation passive millimetre-wave sensor could reduce background clutter and increase the visibility of objects due to their polarisation dependent temperature variation. If the object were viewed with the radiation polarisation at or near to the optimum for the material from which the object were made observed contrast differences could be maximised and detection probabilities increased.

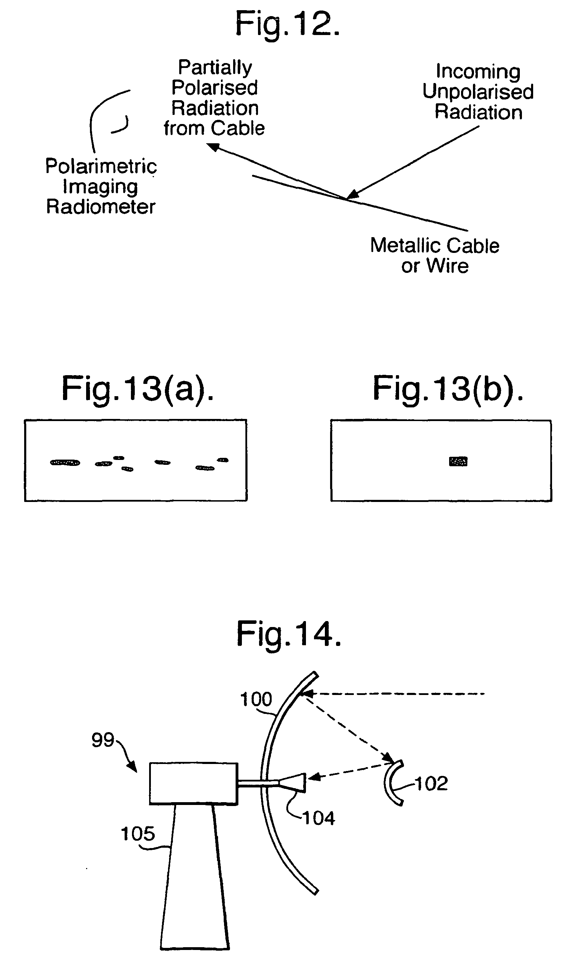

As a further example of polarimetric detection, if an object were illuminated with right handed circularly polarised radiation and the reflections are observed at normal incidence to the object a plane surface will reflect left hand circularly polarised radiation. The objects are usually curved and therefore have very few areas that are normal to the viewing direction. However, a thin elongate object such as, for example, a wire having a width that is less than the wavelength of the incident radiation, will reflect right hand circularly polarised radiation. This would allow, for example, pilots to detect transmission lines as the individual strands of wire are typically a couple of mm thick, or for the detection of wires or pipes running within internal walls of a building. Unpolarised radiation reflected from a wire will reflect with partial linear polarisation, as shown in Figure 12. The detection system could be arranged to detect linear polarisation as a function of angle or an imaging polarimeter could be arranged to measure the full Stokes vector. This allows the detection of, for example, buried or hidden wires, trip wires, communication cables, bugging devices and high voltage cables for helicopter collision avoidance systems. Also irradiation of an object with circularly polarised light and measurement of the reflected/ scattered radiation in the linear polarised mode is possible.

Similarly, a polarimetric radiometer placed adjacent an object having a regular structure for example, struts in walls, can be used to determine the structure. As the linear polarisation angle of the radiation is varied the struts/ribs will appear as a regular pattern in the radiometric cavity fringe signal as a function is the polarisation angle.

Horizontally and vertically polarised radiation have differing reflectivities away from normal incidence detection which increases contrast in the s-polarisation but reduces it in the p-polarisation. The maximum angle of differences occurring when the angle of detection corresponds to the Brewster angle. It can be arranged for an object to be effectively viewed at a large number of angles by rotating the object on a turntable, rotating the detector about the object or using a large number of angularly displaced receivers. This maximises the likelihood of the object being viewed at the angle of maximum contrast.

A benefit of polarimetry is that the reflections of dielectrics are strongly polarisation dependent and typically appear warmer in the vertical polarisation than in the horizontal polarisation and the contrast of metals is substantially polarisation independent. This is shown in Figure 13 (a&b) in which the 'cold' signature of a metal object remains when the detector is arranged to receive only vertically polarised radiation and the 'hot' signatures of non-metallic objects are excluded from detection, whilst being detected when the detector is arranged to receive horizontally polarised radiation.

Figure 14 shows a Cassegrain detection arrangement 99 comprising a primary reflector 100, a subreflector 102, a rectangular feedhorn 104 and a detection/filtering system 105.

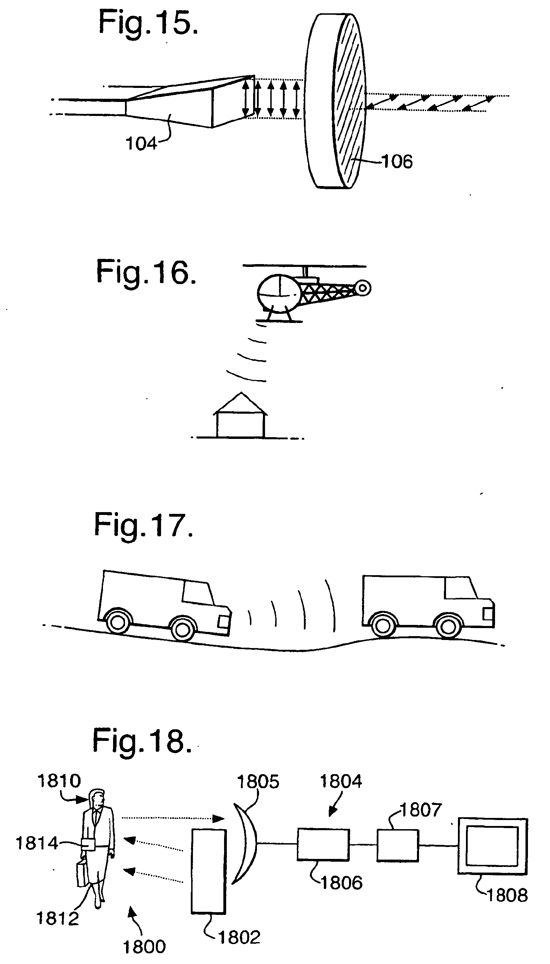

Adjustable linear polarimetric sensitivity is introduced by placing a rotatable half wave plate 106 in front of the feedhorn 104 as shown in Figure 15. Sensitivity to circularly polarised light can be introduced by the use of a quarter wave plate in place of the half wave plate 106.

A multichannel detector can be configured such that a part of a scene which has been sampled in one polarisation can be sampled in another polarisation by a subsequent channel, typically the next/adjacent channel. This would reduce the delay between different polarisation samples of a point in a scene and consequently improve measurement accuracy and would also reduce the necessity to alter wave plates in front of the feedhorn 106. For example an 8-channel detector may have two horns configured to receive horizontally polarised radiation, two horns configured to receive vertically polarised radiation, the two 45° linear polarisation states may be sampled by two horns and the left and right handed circularly polarised light by the remaining two horns.

A staring system may rapidly spin the waveplate and measure the temporal output of the channel which would allow the simultaneous detection of temporal and polarimetric signatures.

Meanderlines or dielectric plates with fins on one or both sides can be used to form waveplates at mm/cm wavelengths.

A further application of mm/cm wavelength systems is in vibrometry when a vibrating object forms one end of a cavity. The movements of this object will be detected by the frequency shift of the fringes. As fringes exist at all frequencies simultaneously the data can be processed at all frequencies simultaneously leading to high signal to noise ratios and a high precision of displacement measurement e.g. 20000K, 40GHz bandwidth yields a displacement precision of $2\mu m$.

It is possible to calculate the angle between the ground and a surface, for example, the angle of a roof, the sides of buildings and vehicles by correlating the angle of polarisation of radiation which yields the minimum radiation temperature image. This may lead to the recognition and identification of objects from the angular orientation of their surfaces.

Thus, for example, a helicopter collision avoidance as shown in Figure 16 system may be horizontally polarised in order to give better contrast of roads and roofs. Such a system could employ a rotatable half-wave plate positioned in front of a main imager. Rotation of the half-wave plate by half of the roll angle of the aircraft would ensure that the plane of polarisation detected would remain constant with respect to the ground and thus roofs and roads would continue to be imaged when the aircraft is manoeuvred.

Conversely, see for example Figure 17 a motor vehicle detection/avoidance system would benefit from being vertically polarised as this would reduce clutter from dielectrics such as roads, roofs etc. whilst still showing up metallic vehicle bodies.

This effect can be used, for example, in airport security scanners where the modulation of the polarisation of emitted radiation can lead to increased contrast and discrimination between dielectrics e.g. explosives and metals e.g. guns.

Referring now to Figure 18, a millimetre wave imaging imaging security scanner 1800 comprises a quasi-thermal radiation source 1802 and a multichannel passive millimetre wave imager 1804. The radiation source 1802 is typically a large area source (source area$>>\lambda^2$, up to several m$^2$). The imager 1804 comprises a receiver array 1805, a radio frequency (rf) filter bank 1806, typically comb filters, a processor 1807 and a screen 1808.

Usually, each receiver channel in the imager 1804 will have comb filters to examine the frequency structure arising from cavity effects, for example due to layers of explosive and clothing against a subjects body.

The radiation source 1802 emits broad band quasi-thermal radiation, which can be exploited in the far field and imaging applications. The emitted radiation impinges upon a subject 1810 passing the scanner. Cavities are present between the layers of the subject's clothes 1812 and the subject 1810, these cavities give rise to radiometric cavity fringes as detailed hereinbefore. Should the subject 1810 be carrying, for example, an explosive device 1814 concealed by their clothes 1812 characteristic radiometric cavity fringes will be produced.

The imager 1804 receives the radiometric cavity fringes superposed upon the broadband quasi-thermal radiation and utilises the rf filter bank 1806 to remove the quasi-thermal radiation background and detect the radiometric cavity fringe signals characteristic of, for example, the explosive device 1814 or the clothes 1812-subject 1810 cavity.

An analysed signal is passed to the processor 1807 where further operations are carried out prior to outputting a millimetre wave image of a scene including the subject 1810 on the screen 1812, typically to be viewed by security personnel.

**Claims**

1. An object detection (10) apparatus comprising a detection arrangement (12) **characterised in that** the apparatus further comprises a radiation source (34) adapted to emit thermal-like radiation in the range of the order of 1 GHz and above to 1000 GHz frequency range, and **in that** the detection arrangement (12) comprises a tuner means (38) to vary a coherence length associated with the detection arrangement (12), the detection arrangement (12) being adapted to detect radiation emitted by the source and reflected from a cavity (48) defined by two surfaces or interfaces (46,50) spaced apart by a distance less than the coherence length wherein at least one surface of the cavity is formed by a surface of the object and wherein the object is detected by processing the frequency response of the cavity as detected by the detection arrangement.

2. Apparatus as claimed in claim 1 wherein the detection arrangement (12) is adapted to detect in use emitted radiation reflected from the cavity when standing waves (51) are set up in use between the surfaces or interfaces (46,50).

3. Apparatus as claimed in any preceding claim wherein the detection arrangement (12) is adapted to detect in use emitted radiation reflected from the cavity when standing waves (51) are set up in use within the cavity (48).

4. Apparatus as claimed in any preceding claim wherein the radiation source (34) is polychromatic and a plurality of standing waves (51) arc formed in use.

5. Apparatus as claimed in any preceding claim wherein the radiation source (34) provides incoherent radiation in use.

6. Apparatus as claimed in any preceding claim wherein the detection arrangement (12) is a radiometer (36).

7.  Apparatus as claimed in any preceding claim wherein the detection arrangement (12) comprises an array of sensor elements (32).

8.  An apparatus as claimed in any preceding claim wherein a power output of the radiation source (34) is less than 1nW.

9.  An apparatus as claimed in any preceding claim wherein the radiation is polarised.

10. An apparatus as claimed in any preceding claim wherein the radiation source (34) is an amplifier.

11. An apparatus as claimed in claim 10 wherein the amplifier (34) that amplifies detected signals also emits radiation in use.

12. An apparatus as claimed in any preceding claim wherein two radiation sources (34) are provided and the radiation from the sources interferes, in use, on a surface of the cavity (48).

13. An apparatus as claimed in any preceding claim wherein there are provided two radiation sources (34).

14. A method of detecting an object including the steps of:

> (i) providing a detection arrangement (12) adapted to detect radiation from a radiation source (34);
> **characterised by** the steps of
> (ii) providing a radiation source (34) adapted to emit thermal-like radiation in the 1 GHz to 1000 GHz frequency range,
> (iii) tuning a bandwidth associated with the detection arrangement (12), thereby varying a coherence length associated with incoming radiation; and
> (iv) detecting radiation (51) emitted from the source and resonantly reflected from a cavity (48) defined by two interfaces or surfaces (46,50) spaced apart by a distance less than the coherence length, and
> (v) processing the frequency response of the cavity as detected by the detection arrangement to identify the presence or otherwise of an object.

15. A method as claimed in claim 14 including the step of forming standing waves (51) between the two interfaces or surfaces (46,50) and detecting the reflected radiation when such standing waves are formed.

16. A method as claimed in any one of claims 14 or 15 including the step of providing the detection arrangement (12) in the form of a radiometer (36).

17. A millimetre wave imaging security scanner comprising an object detection apparatus as claimed in any one of claims 1 to 13.

18. A scanner as claimed in claim 17 comprising a large area radiation source.

19. A scanner as claimed any one of claim 17 to 18 wherein the detection arrangement (12) comprises a millimetre wave imaging system.

20. A scanner as claimed in any one of claims 17 to 19 wherein the detection arrangement (12) is arranged to generate a pixelated image of a scene.

21. A scanner as claimed in any one of claims 17 to 20 wherein the interfaces (46,50) are formed between any two of the following: subject's body, subject's clothing, explosive material, explosive device, firearm, blade, any other weapon.

**Revendications**

1.  Appareil de détection d'objets (10) comprenant un dispositif de détection (12) **caractérisé en ce que** l'appareil comprend en outre une source de rayonnement (34) adaptée pour émettre un rayonnement de type thermique dans la plage de fréquence de l'ordre de 1 GHz et plus jusqu'à 1000 GHz, et **en ce que** le dispositif de détection (12) comprend un moyen de dispositif d'accord (38) pour faire varier une longueur de cohérence associée au dispositif de détection (12), le dispositif de détection (12) étant adapté pour détecter le rayonnement émis par la source et réfléchi d'une cavité (48) définie par deux surfaces ou interfaces (46, 50) espacées d'une distance inférieure à la longueur de cohérence, dans lequel au moins une surface de la cavité est formée par une surface de l'objet et dans lequel l'objet est détecté en traitant la réponse en fréquence de la cavité telle qu'elle est détectée par le dispositif de détection.

2. Appareil selon la revendication 1 dans lequel le dispositif de détection (12) est adapté pour détecter en utilisation le rayonnement émis réfléchi à partir de la cavité quand des ondes stationnaires (51) sont définies en utilisation entre les surfaces ou les interfaces (46, 50).

3. Appareil selon l'une quelconque des revendications précédentes dans lequel le dispositif de détection (12) est adapté pour détecter en utilisation le rayonnement émis réfléchi à partir de la cavité quand des ondes stationnaires (51) sont configurées en utilisation dans la cavité (48).

4. Appareil selon l'une quelconque des revendications précédentes dans lequel la source de rayonnement (34) est polychromatique et une pluralité d'ondes stationnaires (51) sont formées en utilisation.

5. Appareil selon l'une quelconque des revendications précédentes dans lequel la source de rayonnement (34) propose un rayonnement incohérent en utilisation.

6. Appareil selon l'une quelconque des revendications précédentes dans lequel le dispositif de détection (12) est un radiomètre (36).

7. Appareil selon l'une quelconque des revendications précédentes dans lequel le dispositif de détection (12) comprend un ensemble d'éléments détecteurs (32).

8. Appareil selon l'une quelconque des revendications précédentes dans lequel une sortie de puissance de la source de rayonnement (34) est inférieure à 1 nW.

9. Appareil selon l'une quelconque des revendications précédentes dans lequel le rayonnement est polarisé.

10. Appareil selon l'une quelconque des revendications précédentes dans lequel la source de rayonnement (34) est un amplificateur.

11. Appareil selon la revendication 10 dans lequel l'amplificateur (34) qui amplifie les signaux détectés émet aussi un rayonnement en utilisation.

12. Appareil selon l'une quelconque des revendications précédentes dans lequel deux sources de rayonnement (34) sont fournies et le rayonnement provenant des sources heurte, en utilisation, une surface de la cavité (48).

13. Appareil selon l'une quelconque des revendications précédentes est dans lequel deux sources de rayonnement (34) sont proposées.

14. Procédé de détection d'un objet comprenant les étapes consistant à :

(i) fournir un dispositif de détection (12) adapté pour détecter le rayonnement provenant d'une source de rayonnement (34) ;
**caractérisé par** les étapes consistant à
(ii) proposer une source de rayonnement (34) adaptée pour émettre un rayonnement de type thermique dans la plage de fréquence de 1 GHz à 1000 GHz,
(iii) régler une bande passante associée au dispositif de détection (12), faisant varier ainsi une longueur de cohérence associée au rayonnement entrant ; et
(iv) détecter le rayonnement (51) émis de la source et réfléchi en résonance d'une cavité (48) définie par deux interfaces ou surfaces (46, 50) espacées d'une distance inférieure à la longueur de cohérence, et
(v) traiter la réponse en fréquence de la cavité telle qu'elle est détectée par le dispositif de détection pour identifier la présence ou autrement d'un objet.

15. Procédé selon la revendication 14 comprenant l'étape consistant à former des ondes stationnaires (51) entre les deux interfaces ou surfaces (46, 50) et à détecter le rayonnement réfléchi quand de telles ondes stationnaires sont formées.

16. Procédé selon l'une quelconque des revendications 14 ou 15 comprenant l'étape consistant à proposer le dispositif de détection (12) sous la forme d'un radiomètre (36) .

17. Scanner de sécurité d'imagerie à ondes millimétriques comprenant un appareil de détection d'objet selon l'une quelconque des revendications 1 à 13.

18. Scanner selon la revendication 17 comprenant une source de rayonnement de vaste superficie.

19. Scanner selon l'une quelconque des revendications 17 à 18 dans lequel le dispositif de détection (12) comprend un système d'imagerie à ondes millimétriques.

20. Scanner selon l'une quelconque des revendications 17 à 19 dans lequel le dispositif de détection (12) est disposé pour générer une image sous forme de pixels d'une scène.

21. Scanner selon l'une quelconque des revendications 17 à 20 dans lequel les interfaces (46, 50) sont formées entre deux quelconques des éléments suivants : corps du sujet, vêtements du sujet, matière explosif, engin explosif, arme à feu, lame, une autre arme.


**Patentansprüche**

1. Vorrichtung (10) zur Objekterfassung, die eine Erfassungsanordnung (12) umfasst, **dadurch gekennzeichnet, dass** die Vorrichtung ferner eine Strahlungsquelle (34) enthält, die so beschaffen ist, dass sie wärmeähnliche Strahlung in einem Frequenzbereich der Größenordnung von 1 GHz und darüber bis 1000 GHz aussendet und dass die Erfassungsanordnung (12) Tunermittel (38) enthält, um eine Kohärenzlänge, die der Erfassungsanordnung (12) zugeordnet ist, zu ändern, wobei die Erfassungsanordnung (12) so beschaffen ist, dass sie Strahlung erfasst; die von der Quelle ausgesendet und von einem Hohlraum (48) reflektiert wird, der durch zwei Oberflächen oder Grenzflächen (46, 50) definiert ist, die um eine Strecke beabstandet sind, die kleiner als die Kohärenzlänge ist, wobei wenigstens eine Oberfläche des Hohlraums durch eine Oberfläche des Objekts gebildet wird und wobei das Objekt erfasst wird, indem die Frequenzantwort des Hohlraums, wenn dieser durch die Erfassungsanordnung erfasst wird, verarbeitet wird.

2. Vorrichtung nach Anspruch 1, bei der die Erfassungsanordnung (12) so beschaffen ist, dass sie im Betrieb ausgesendete Strahlung, die von dem Hohlraum reflektiert wird, erfasst, wenn im Betrieb zwischen den Oberflächen oder Grenzflächen (46, 50) stehende Wellen aufgebaut werden.

3. Vorrichtung nach einem vorhergehenden Anspruch, bei dem die Erfassungsanordnung (12) so beschaffen ist, dass sie im Betrieb ausgesendete Strahlung, die von dem Hohlraum reflektiert wird, erfasst, wenn im Betrieb in dem Hohlraum (48) stehende Wellen aufgebaut werden.

4. Vorrichtung nach einem vorhergehenden Anspruch, bei der die Strahlungsquelle (24) polychromatisch ist und im Betrieb mehrere stehende Wellen (51) aufgebaut werden.

5. Vorrichtung nach einem vorhergehenden Anspruch, bei der die Strahlungsquelle (34) im Betrieb inkohärente Strahlung liefert.

6. Vorrichtung nach einem vorhergehenden Anspruch, bei der die Erfassungsanordnung (12) ein Radiometer (36) ist.

7. Vorrichtung nach einem vorhergehenden Anspruch, bei der die Erfassungsanordnung (12) eine Anordnung aus Sensorelementen (32) enthält.

8. Vorrichtung nach einem vorhergehenden Anspruch, bei der eine Ausgangsleistung der Strahlungsquelle (34) kleiner als 1 nW ist.

9. Vorrichtung nach einem vorhergehenden Anspruch, bei der die Strahlung polarisiert ist.

**10.** Vorrichtung nach einem vorhergehenden Anspruch, bei der die Strahlungsquelle (34) ein Verstärker ist.

**11.** Vorrichtung nach Anspruch 10, bei der der Verstärker (34), der erfasste Signale verstärkt, im Betrieb außerdem Strahlung aussendet.

**12.** Vorrichtung nach einem vorhergehenden Anspruch, bei der zwei Strahlungsquellen (34) vorgesehen sind und die Strahlung von den Quellen im Betrieb an einer Oberfläche des Hohlraums (48) gestört wird.

**13.** Vorrichtung nach einem vorhergehenden Anspruch, bei der zwei Strahlungsquellen (34) vorgesehen sind.

**14.** Verfahren zum Erfassen eines Objekts, wobei das Verfahren das die folgenden Schritte umfasst:

(i) Vorsehen einer Erfassungsanordnung (12), die so beschaffen ist, dass sie Strahlung von einer Strahlungsquelle (34) erfasst;
(ii) Vorsehen einer Strahlungsquelle (34), die so beschaffen ist, dass sie wärmeähnliche Strahlung im Frequenzbereich von 1 GHz bis 1000 GHz aussendet;
(iii) Abstimmen einer Bandbreite, die der Erfassungsanordnung (12) zugeordnet ist, wodurch eine Kohärenzlänge, die ankommender Strahlung zugeordnet ist, geändert wird;
(iv) Erfassen von Strahlung (51), die von der Quelle ausgesendet wird und in Resonanz von einem Hohlraum (48) reflektiert wird, der durch zwei Grenzflächen oder Oberflächen (46, 50) definiert ist, die um eine Strecke beabstandet sind, die kleiner als die Kohärenzlänge ist; und
(v) Verarbeiten der Frequenzantwort des Hohlraums, wenn dieser durch die Erfassungsanordnung erfasst wird, um das Vorhandensein oder eine andere Eigenschaft eines Objekts zu identifizieren.

**15.** Verfahren nach Anspruch 14, das den Schritt zum Bilden von stehenden Wellen (51) zwischen den Grenzflächen oder Oberflächen (46, 50) und zum Erfassen der reflektierten Strahlung, wenn derartige stehende Wellen aufgebaut werden, umfasst.

**16.** Verfahren nach einem der Ansprüche 14 oder 15, das den Schritt zum Bereitstellen der Erfassungsanordnung (12) in Form eines Radiometers (36) umfasst.

**17.** Sicherheitsscanner mit Millimeterwellen-Bilderzeugung, der eine Vorrichtung zur Objekterfassung nach einem der Ansprüche 1 bis 13 enthält.

**18.** Scanner nach Anspruch 17, der eine Großflächen-Strahlungsquelle enthält.

**19.** Scanner nach einem der Ansprüche 17 und 18, bei dem die Erfassungsanordnung (12) ein System zur Millimeterwellen-Bilderzeugung enthält.

**20.** Scanner nach einem der Ansprüche 17 bis 19, bei dem die Erfassungsanordnung (12) so beschaffen ist, dass sie ein aus Bildelementen bestehendes Bild einer Szene erzeugt.

**21.** Scanner nach einem der Ansprüche 17 bis 20, bei dem die Grenzflächen (46, 50) zwischen zwei beliebigen Elementen aus Folgendem gebildet sind: Körper des Subjekts, Kleidung des Subjekts, Sprengstoff, Sprengvorrichtung, Feuerwaffe, Klinge und irgendeine andere Waffe.

# Fig.1.

Burial Depth d

# Fig.2.

$$l_C = \frac{c}{\Delta f}$$

Cavity 2

Cavity 1

$T_N$
Backwards
(Illuminates
Object)

Output $T(f)$

# Fig.3.

# Fig.4.

Fig.5.

Fig.6.

Fig.7.

# Fig.8.

# Fig.9.

# Fig.10.

# Fig.11.

# Fig.12.

Partially
Polarised
Radiation
from Cable

Incoming
Unpolarised
Radiation

Polarimetric
Imaging
Radiometer

Metallic Cable
or Wire

# Fig.13(a).

# Fig.13(b).

# Fig.14.

100

99

102

104

105

# Fig.15.

104    106

# Fig.16.

# Fig.17.

# Fig.18.

1810    1805    1804    1807

1814

1812

1800    1802    1806    1808